# EUROPÄISCHE PATENTANMELDUNG

(11) **EP 4 803 358 A1**
(43) Veröffentlichungstag der Anmeldung: **09.09.2026**
(21) Anmeldenummer: 26160262.7
(22) Anmeldetag: 24.02.2026
(51) Int. Cl.: B60N 2/02

(54) **FAHRZEUGSITZ MIT SPINDELMUTTERAUFNAHME**

(30) Priorität: 03.03.2025 DE 102025107944
(71) Anmelder: GRAMMER AG, 92289 Ursensollen (DE)
(72) Erfinder: LOREY, Konstantin, 92546 Schmidgaden (DE)
(74) Vertreter: Hannke Bittner & Partner mbB Regensburg

(57) **Zusammenfassung**

Die Erfindung betrifft Fahrzeugsitz (1), umfassend einen Fahrzeugsitzaufbau (5) mit einem Sitzträger (6) und einer Sitztiefenplatte (7), wobei die Sitztiefenplatte (7) beweglich an dem Sitzträger (6) angeordnet ist und durch eine Antriebsvorrichtung (9) in einer Längsrichtung (X) gegenüber dem Sitzträger (6) verschiebbar ist, wobei die Antriebsvorrichtung (9) mit einem Aufnahmebauteil (13) kraftübertragend verbunden ist, wobei das Aufnahmebauteil (13) zumindest zweiteilig ausgebildet ist, wobei ein erster Teil (13a) fest mit dem Sitzträger (6) oder der Sitztiefenplatte (7) verbunden ist und ein zweiter Teil (13b) mit der Antriebsvorrichtung (9) zug- und/oder schubübertragend wirkverbunden und lösbar mit dem ersten Teil (13a) verbunden ist.

## Beschreibung

Die Erfindung betrifft einen Fahrzeugsitz umfassend einen Fahrzeugsitzaufbau mit einem Sitzträger, einer Sitztiefenplatte und einer Antriebsvorrichtung, wobei die Sitztiefenplatte beweglich an dem Sitzträger angeordnet ist und durch die Antriebsvorrichtung in einer Längsrichtung gegenüber dem Sitzträger verschiebbar ist. Zudem ist die Antriebsvorrichtung mit einem Aufnahmebauteil kraftübertragend verbunden.

Nutzfahrzeuge, wie Landmaschinen, Baumaschinen oder auch Transportfahrzeuge, werden üblicherweise über einen längeren Zeitraum am Stück genutzt, weshalb der Sitzkomfort für einen Insassen eine übergeordnete Rolle spielt. Entsprechende Fahrzeugsitze werden deshalb mit einer Vielzahl an Komforteinrichtungen, wie zum elektrischen Verstellsystemen versehen.

Bei bisherigen Fahrzeugsitzen für Nutzfahrzeuge beschränken sich die elektrischen Verstellsysteme auf eine Einstellung der Sitzhöhe, einen Abstand zu einem Lenkrad oder der Neigung der Rückenlehne. Eine elektrische Einstellung einer Sitzneigung oder einer Sitztiefe ist bislang nicht vorgesehen oder nur nachteilig umzusetzen. Im Gegensatz zu PKW, bei denen unterhalb des Fahrzeugsitzes viel Platz für die Anordnung elektrischer Antriebe ist, ist bei Nutzfahrzeugen der Bauraum stark begrenzt. Insbesondere weisen Fahrzeugsitze in Nutzfahrzeugen häufig zusätzliche Federsysteme auf, die wesentlich zur Gesamthöhe des Sitzes beitragen. Aufgrund der begrenzten Kabinenhöhe der Nutzfahrzeuge werden Sitzteile dementsprechend direkt auf den Federsystemen bzw. auf Verstellschienen angeordnet, die auf den Federsystemen befestigt sind. Zur Anordnung von elektrischen Verstellsystemen ist es dann notwendig, zusätzlichen Bauraum beispielsweise durch ein dickeres Sitzpolster oder einen zusätzlichen Abstand zwischen Sitzträger und Verstellschiene zu schaffen, um Bauteile wie einen Elektromotor unterbringen zu können.

Um nun einen Fahrzeugsitz für Nutzfahrzeuge zu verwirklichen, bei dem der Komfort durch eine elektrische Verstellung der Sitztiefe und gegebenenfalls auch der Sitzneigung verbessert wird, ist vorgesehen, dass eine Antriebsvorrichtung zwischen Sitzpolster und einem Sitzträger angeordnet ist. Zwischen Sitzpolster und Sitzträger ist die Antriebsvorrichtung beziehungsweise das Aufnahmebauteil jedoch im Falle einer Fehlfunktion unzugänglich, sodass der Fahrzeugsitzaufbau aufwendig demontiert werden müsste.

Demzufolge ist es Aufgabe der Erfindung einen Fahrzeugsitz bereitzustellen, bei dem die Antriebsvorrichtung im Falle einer Fehlunktion oder zu Wartungszwecken vom Fahrzeugsitz zumindest teilweise gelöst werden kann.

Zur Lösung der Aufgabe wird ein erfindungsgemäßer Fahrzeugsitz bereitgestellt, umfassend einen Fahrzeugsitzaufbau mit einem Sitzträger und einer Sitztiefenplatte, wobei die Sitztiefenplatte beweglich an dem Sitzträger angeordnet ist und durch eine Antriebsvorrichtung in einer Längsrichtung gegenüber dem Sitzträger verschiebbar ist, wobei die Antriebsvorrichtung mit einem Aufnahmebauteil kraftübertragend verbunden ist, das Aufnahmebauteil zumindest zweiteilig ausgebildet ist und wobei ein erster Teil fest mit dem Sitzträger oder der Sitztiefenplatte verbunden ist und ein zweiter Teil mit der Antriebsvorrichtung zug- und/oder schubübertragend wirkverbunden und lösbar mit dem ersten Teil verbunden ist.

Nach einer Ausführungsform ist die Antriebsvorrichtung im Wesentlichen fest mit dem zweiten Teil des Aufnahmebauteils verbunden. In einem Fall ist die Antriebsvorrichtung fest mit der Sitztiefenplatte und das Aufnahmebauteil fest mit dem Sitzträger verbunden. Alternativ dazu kann auch der Sitzträger mit der Antriebsvorrichtung und die Sitztiefenplatte mit dem Aufnahmebauteil verbunden sein. Nach einer weiteren Ausführungsform weist der Fahrzeugsitz eine Sitzneigungsplatte zur Einstellung einer Sitzneigung auf, die in einer Höhenrichtung oberhalb der Sitztiefenplatte angeordnet ist. Die Antriebsvorrichtung ist dabei unterhalb der Sitzneigungsplatte und oberhalb des Sitzträgers angeordnet, insbesondere im Wesentlichen auch oberhalb der Sitztiefenplatte. Die Sitztiefenplatte ist bevorzugt über eine Führungseinrichtung mit dem Sitzträger verbunden, wobei die Führungseinrichtung insbesondere eine Nutensteinführung umfasst wodurch die Sitztiefenplatte in Längsrichtung gegenüber dem Sitzträger verschiebbar ist. Eine Sitzneigungsplatte ist bevorzugt drehbar um eine in einer Breitenrichtung verlaufenden Drehachse an der Sitztiefenplatte angeordnet. Weiterhin können die Sitzneigungsplatte die Sitztiefenplatte teilweise überlappend angeordnet sein. Bevorzugt ist die Antriebsvorrichtung in diesem Überlappungsbereich im Wesentlichen zwischen Sitzneigungsplatte und Sitztiefenplatte angeordnet.

Nach einer besonders bevorzugten Ausführungsform weist der Fahrzeugsitz eine Sitzfläche und/oder ein Sitzpolster auf, die auf der Sitztiefenplatte angeordnet sind, wobei die Antriebsvorrichtung zwischen Sitzfläche beziehungsweise Sitzpolster und dem Sitzträger angeordnet ist.

Insbesondere kann die Sitzfläche auch durch das Sitzpolster oder durch die Sitztiefenplatte und/oder die Sitzneigungsplatte ausgebildet sein.

Nach einer Ausführungsform ist die Sitztiefenplatte, die Antriebsvorrichtung, bevorzugt die Sitzneigungsplatte, weiter bevorzugt das Sitzpolster und/oder die Sitzfläche als Sitzteilbaugruppe ausgebildet, die gemeinsam in den Sitzträger einbaubar beziehungsweise an dem Sitzträger montierbar sind. Dazu kann eine Nutensteinführung Nuten mit Einführöffnungen aufweisen, in die entsprechende Nutensteine, insbesondere in Höhenrichtung einsetzbar oder entnehmbar sind. Bevorzugt wird die Antriebsvorrichtung dementsprechend beim Einbau beziehungsweise der Montage mit dem Aufnahmebauteil fest verbunden. Durch die Antriebsvorrichtung kann dann die Sitztiefenplatte beziehungsweise die Sitzteilbaugruppe gegenüber dem Sitzträger in Längsrichtung verschoben werden. Dabei bewegen sich die Nutensteine vorzugsweise aus den Einführöffnungen, wobei die Führungseinrichtung einen Formschluss zwischen Sitzträger und Sitztiefenplatte in Höhen- und in Breitenrichtung ausbildet.

Im Falle einer Fehlfunktion kann es sein, dass die Sitztiefenplatte beziehungsweise die Sitzteilbaugruppe nicht in eine Montageposition bewegt werden kann, in der die Nutensteine durch die Einführöffnungen aus den Nuten entnommen werden können. Durch die Anordnung der Antriebsvorrichtung zwischen Sitzträger und Sitzpolster beziehungsweise zwischen Sitztiefenplatte und Sitzpolster ist die Antriebsvorrichtung im Allgemeinen unzugänglich. Um die Sitztiefenplatte beziehungsweise die Sitzteilbaugruppe dennoch aus dem Sitzträger ausbauen zu können beziehungsweise vom Sitzträger zu demontieren, ist das Aufnahmebauteil zweiteilig ausgebildet, wobei die beiden Teile lösbar miteinander verbunden sind.

Nach einer besonders bevorzugten Ausführungsform weist die Antriebsvorrichtung eine sich im Wesentlichen in Längsrichtung erstreckende Spindel und eine Laufmutter auf, wobei die Spindel und die Laufmutter in einem Gewindeeingriff stehen und die Laufmutter drehfest vom Aufnahmebauteil aufgenommen ist.

Insbesondere weist die Antriebsvorrichtung auch eine Antriebseinheit, beispielsweise einen Elektromotor oder einen manuellen Kurbelantrieb auf. Diese ist bevorzugt durch eine Spindel oder eine Zahnstange mit dem Aufnahmebauteil zug- und schubübertragend verbunden. Insbesondere ist die Laufmutter drehfest gegenüber einer Drehung um die Längsrichtung und um die Höhenrichtung im Aufnahmebauteil aufgenommen.

Nach einer besonders bevorzugten Ausführungsform weist die Laufmutter mindestens einen sich im Wesentlichen senkrecht zur Längsrichtung erstreckenden Zapfen auf und der zweite Teil einen zumindest teilweise gabelförmigen Abschnitt auf, wobei der Zapfen der Laufmutter in dem gabelförmigen Abschnitt angeordnet ist.

Besonders bevorzugt erstreckt sich der Zapfen im Wesentlichen in Breitenrichtung, wobei sich die Zinken des gabelförmigen Abschnittes im Wesentlichen in Höhenrichtung erstrecken. Dabei umschließt der gabelförmige Abschnitt den Zapfen teilweise. Bevorzugt ist der Zapfen in Höhenrichtung nach unten in den gabelförmigen Abschnitt und das Aufnahmebauteil einführbar. Dadurch kann die Laufmutter bei einer Montage der Sitztiefenplatte beziehungsweise der Sitzteilbaugruppe von oben in das Aufnahmebauteil eingesetzt werden.

Nach einer besonders bevorzugten Ausführungsform ist, der mindestens eine Zapfen zumindest teilweise zylinderförmig ausgebildet ist, wobei der gabelförmige Abschnitt zumindest zwei Zinken und dazwischen eine zumindest teilweise quaderförmige oder prismenförmige Ausnehmung umfasst, in der der mindestens eine Zapfen angeordnet ist.

Um eine Zentrierung zwischen Laufmutter und Aufnahmebauteil zu erleichtern ist der Zapfen bevorzugt teilweise rund ausgebildet. Bevorzugt ist der Zapfen im Wesentlichen quaderförmig oder prismenförmig, wobei zwei gegenüberliegende Seiten, die insbesondere senkrecht zur Längsrichtung ausgerichtet sind, konvex gewölbt sind.

Nach einer besonders bevorzugten Ausführungsform ist die Ausnehmung zwischen zwei Zinken des gabelförmigen Abschnitts in Längsrichtung größer als der Zapfen, wobei ein Klammerelement vorgesehen ist, das den Zapfen zumindest teilweise umschließt und zwischen Zapfen und gabelförmigem Abschnitt verpresst ist.

Da die Rundung zwar beim Einführen des Zapfen in den gabelförmigen Abschnitt hilft, jedoch die Kontaktfläche zwischen Aufnahmebauteil und Laufmutter insbesondere in Längsrichtung verringert und damit die Flächenpressung erhöht, ist ein Klammerelement zwischen gabelförmigen Abschnitt und Zapfen vorgesehen, die einen Zwischenraum zwischen Zapfen und gabelförmigen Abschnitt im Wesentlichen komplementär ausfüllt. Dabei kann zudem ein Spiel zwischen Laufmutter und Aufnahmebauteil durch das Klammerelement reduziert werden. Insbesondere ist die Klammer elastisch ausgebildet und zudem bevorzugt aus einem Polymer.

Nach einer bevorzugten Ausführungsform weist die Laufmutter einen weiteren Zapfen auf, der bezüglich einer Symmetrieebene aus Längsrichtung und Höhenrichtung symmetrisch zum ersten Zapfen angeordnet ist. Dementsprechend ist das Aufnahmebauteil ebenso symmetrisch mit einem zweiten gabelförmigen Abschnitt ausgebildet. Bevorzugt verläuft die Symmetrieebene durch die Drehachse der Spindel.

Nach einer besonders bevorzugten Ausführungsform weist zumindest der erste Teil oder der zweite Teil eine Nut auf und zumindest der zweite Teil oder der erste Teil ein zur Nut komplementäres Profil auf, wobei der erste und der zweite Teil durch die Anordnung des Profils in der Nut in einer Breitenrichtung und einer Höhenrichtung formschlüssig miteinander verbunden sind.

Bevorzugt ist die Nut und das Profil im wesentlichen T-förmig oder kreuzförmig ausgebildet, wobei die Nut und das Profil im Wesentlichen passgenau zueinander ausgebildet sind. Insbesondere ist das Profil dabei in der Nut in Längsrichtung, verschiebbar. Dabei weist die Nut bevorzugt einseitig einen Anschlag auf, der auf der der Antriebsvorrichtung abgewandten Seite des Aufnahmebauteils angeordnet ist.

Nach einer besonders bevorzugten Ausführungsform ist ein lösbares Sicherungselement vorgesehen, wobei das Sicherungselement den ersten Teil und den zweiten Teil in Längsrichtung formschlüssig und oder kraftschlüssig miteinander verbinden.

Als Sicherungselement kommen demnach insbesondere Klammern, Schnallen, Riegel oder Schrauben infrage.

Nach einer besonders bevorzugten Ausführungsform ist das Sicherungselement ein Gewindestift, wobei das Aufnahmebauteil eine komplementäre Gewindeausnehmung aufweist, wobei die Gewindeausnehmung teilweise im ersten Teil und teilweise im zweiten Teil angeordnet ist, wobei ein Gewindeeingriff zwischen Gewindestift und Gewindeausnehmung den ersten Teil und den zweiten Teil formschlüssig und gegebenenfalls kraftschlüssig miteinander verbindet.

Bevorzugt sind das Profil und die Nut im Wesentlichen T- oder kreuzförmig ausgeführt, wobei ein erster Balken sich im Wesentlichen in Höhenrichtung erstreckt und ein zweiter Balken sich im Wesentlichen in Breitenrichtung erstreckt. Dabei weist der sich im Wesentlichen in Höhenrichtung erstreckende Balken des Profils an einem Ende eine insbesondere halbe Gewindeausnehmung auf. Die Gewindeausnehmung verläuft dabei entlang der Längsrichtung. Komplementär dazu weist der sich in Höhenrichtung ersteckende Balken der Nut eine weitere insbesondere halbe Gewindeausnehmung auf. Beide Gewindeausnehmungsanteile ergeben demnach eine vollständige Gewindeausnehmung.

Nach einer besonders bevorzugten Ausführungsform ist der Sitzträger zumindest teilweise schalenförmig ausgebildet, wobei das Aufnahmebauteil zwischen Sitzträger und Sitzpolster beziehungsweise Sitzfläche angeordnet ist und der Fahrzeugsitz eine Zugangsöffnung aufweist, wobei der Gewindestift und/oder ein Antrieb des Gewindestiftes durch die Zugangsöffnung von außerhalb des Fahrzeugsitzes zugänglich ist.

Bevorzugt weist der Fahrzeugsitz, vorderseitig eine insbesondere verschließbare Zugangsöffnung auf, durch die ein Werkzeug in den Sitz einführbar und das Sicherungselement lösbar ist. Im Falle einer Fehlfunktion der Antriebseinheit kann dadurch die Verbindung zwischen erstem Teil und zweitem Teil des Aufnahmebauteils gelöst werden. Dadurch wird die Antriebseinheit vom Aufnahmebauteil getrennt und die Sitztiefenplatte beziehungsweise die Sitzteilbaugruppe kann in eine Montageposition gebracht werden, in der sie aus dem Sitzträger ausgebaut beziehungsweise vom Sitzträger demontiert werden kann.

Weitere vorteilhafte Ausführungsformen ergeben sich aus den Unteransprüchen und der nachfolgenden Beschreibung in Verbindung mit der Zeichnung. Hierbei zeigen:
- Fig. 1: eine Seitenansicht eines Fahrzeugsitzes;
- Fig. 2: eine Seitenansicht eines Fahrzeugsitzaufbaus;
- Fig. 3: eine Draufsicht auf einen Fahrzeugsitzaufbau mit Sitzneigungsplatte;
- Fig. 4: eine Draufsicht auf einen Fahrzeugsitzaufbau ohne Sitzneigungsplatte;
- Fig. 5: eine Schnittansicht eines Fahrzeugsitzaufbaus;
- Fig. 6: eine Explosionsdarstellung eines Aufnahmebauteils;
- Fig. 7a: eine Schnittansicht eines Aufnahmebauteils;
- Fig. 7b: eine frontale Schnittansicht eines Aufnahmebauteils mit Laufmutter und
- Fig. 8: eine seitliche Schnittansicht eines Aufnahmebauteils.

In den Figuren wurden teilweise Bezugszeichen übersichtlichkeitshalber weggelassen.

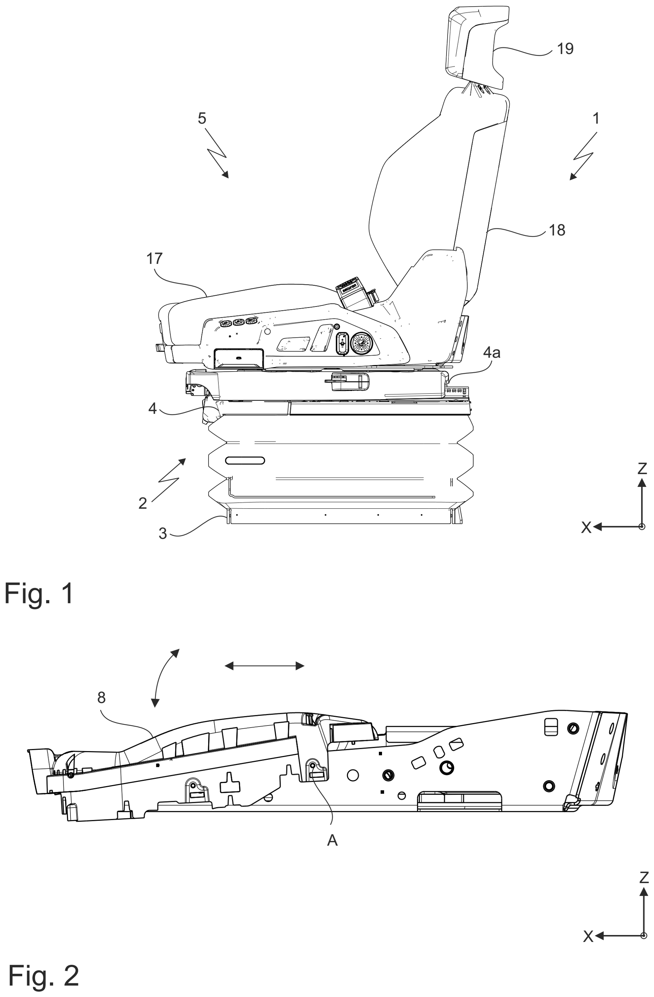

Die Figur 1 zeigt einen erfindungsgemäßen Fahrzeugsitz 1 in einer Seitenansicht. Der Fahrzeugsitz 1 kann entlang der Höhenrichtung Z in einen oberhalb gelegenen Fahrzeugsitzaufbau 5 und einen unterhalb gelegenen Fahrzeugsitzunterbau 2 aufgeteilt werden. Der Fahrzeugsitz weist dabei einen unteren Anteil 3 auf, der an der Karosserie eines Fahrzeuges befestigt ist und einen oberen Anteil 4 auf, an dem der Fahrzeugsitzaufbau 5 befestigt ist. Der untere Anteil 3 und der obere Anteil 4 sind mittels eines hier nicht gezeigten Scherengestells höhenverstellbar und gefedert miteinander verbunden. Der obere Anteil 4 umfasst zudem eine Paar Verstellschienen 4a, um eine Verschiebung des Fahrzeugsitzaufbaus 5 gegenüber dem Fahrzeugsitzunterbaus 3 in Längsrichtung X zu ermöglichen. Der Fahrzeugsitzaufbau 5 umfasst einen Sitzträger 6 in den eine Sitztiefenplatte 7 und eine damit verbundene Sitzneigungsplatte 8 eingesetzt sind. Sitztiefenplatte 7 und Sitzneigungsplatte 8 sind dabei zur gemeinsamen Bewegung gegenüber dem Sitzträger 6 in Längsrichtung X ausgebildet. Auf der Sitztiefenplatte 7 und der Sitzneigungsplatte 8 ist zudem ein Sitzpolster 17 angeordnet. Der Fahrzeugsitz 1 umfasst zudem eine an dem Sitzträger 6 befestigte Rückenlehne 18 sowie eine an der Rückenlehne 18 angeordnete Kopfstütze 19 oder Schulterstütze.

Die Figur 2 zeigt den Sitzträger 6 mit der Sitztiefenplatte 7 und der Sitzneigungsplatte 8 in einer Seitenansicht. Der Sitzträger 6 ist dabei als Schale ausgeführt, wobei ein Boden von einer Rückwand, einer Vorderwand und von zwei Seitenwänden eingeschlossen ist. Der Sitzträger 6 umschließt die Sitztiefenplatte demnach vollständig schalenförmig. Zur Verstellung einer Sitzneigung ist die Sitzneigungsplatte 8 drehbar um die erste Drehachse A an der Sitztiefenplatte 7 angeordnet. Da die Sitztiefenplatte 7 und der Sitzträger 6 im Wesentlichen parallel angeordnet sind, ist die Sitzneigungsplatte 8 damit auch gegenüber dem Sitzträger 6 drehbar um die erste Drehachse A angeordnet. Die Sitztiefenplatte 7 ist hierbei im Wesentlichen und die Sitzneigungsplatte 8 zumindest teilweise schalenförmig ausgebildet, um ein hier nicht gezeigtes Sitzpolster 17 aufzunehmen.

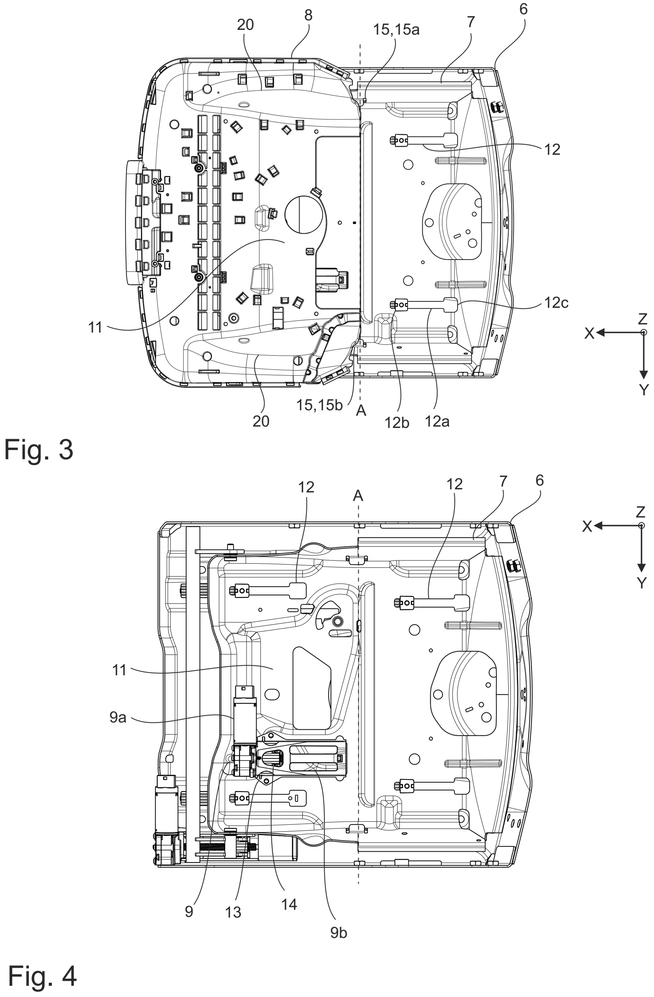

Die Figur 3 zeigt den Sitzträger 6, die Sitztiefenplatte 7 und die Sitzneigungsplatte in einer Draufsicht. In Höhenrichtung Z gesehen ist dabei die Sitztiefenplatte 7 zwischen Sitzträger 6 und Sitzneigungsplatte 8 angeordnet. Die Sitzneigungsplatte 8 ist in einem hinteren Bereich über ein erstes Loslager 15a und ein zweites Loslager 15b drehbar mit der Sitztiefenplatte verbunden. Weiter ist die Sitztiefenplatte 7 über Führungseinrichtungen 12 mit dem Sitzträger 6 verbunden, sodass sich die Sitztiefenplatte im Wesentlichen nur noch in Längsrichtung X bewegen kann. Dazu weist die Sitztiefenplatte vier Führungsnuten 12a auf in die korrespondierende Nutensteine 12b des Sitzträgers 6 eingesetzt sind. Die Führungsnuten 12a sind dabei paarweise jeweils rechtsseitig und linksseitig in einem vorderen Abschnitt und einem hinteren Abschnitt der Sitztiefenplatte 7 angeordnet. Die Nutensteine 12b können in den Führungsnuten 12a entlanggleiten, wodurch eine Bewegung der Sitztiefenplatte 7 in Längsrichtung X ermöglicht wird. Die Sitztiefenplatte 7 kann demnach zwischen einer Montageposition und einer Minimalposition bewegt werden, wobei die Montageposition einer Position entspricht, in der die Sitztiefenplatte 7 maximal gegenüber dem Sitzträger nach vorne geschoben ist. Dabei entspricht die Minimalposition einer minimalen Sitztiefe, in der die Sitztiefenplatte 7 maximal nach hinten geschoben ist. An einem hinteren Ende weisen die Nuten 12a eine Entnahmeöffnung 12c auf. Die Entnahmeöffnung 12c ist dabei größer ausgebildet als die Nutensteine 12b, sodass die Sitztiefenplatte 7 in Höhenrichtung nach oben aus dem Sitzträger entnommen werden kann. Umgekehrt kann die Sitztiefenplatte 7 auch in den Sitzträger 6 eingesetzt werden. Die Sitztiefenplatte 7 ist in der Montageposition in den Sitzträger 6 einsetzbar oder aus dem Sitzträger 6 entnehmbar. Zudem weisen die Sitztiefenplatte 7 und die Sitzneigungsplatte 8 einen Überlappungsbereich 11 auf, in dem sich die Sitztiefenplatte 7 und die Sitzneigungsplatte 8 überlappen. Der Überlappungsbereich 11 erstreckt sich dabei in Längsrichtung X im Wesentlichen von der Drehachse A bis zu einem vorderen Ende der Sitztiefenplatte 7. Die Sitzneigungsplatte 8 weist zudem rechts- und linksseitig Sitzwangen auf, wodurch ein Sitzpolster 17 durch die schalenförmige Ausbildung gestützt wird.

Die Figur 4 zeigt eine Draufsicht auf den Sitzträger 6 und die Sitztiefenplatte 7. Im Überlappungsbereich 11 sind zwei Führungsnuten 12a angeordnet. Zwischen den beiden Führungsnuten 12a ist zudem die Antriebsvorrichtung 9 angeordnet. Die Antriebsvorrichtung 9 umfasst einen ersten Elektromotor 9a, der sich im Wesentlichen in Breitenrichtung Y erstreckt und an der Sitztiefenplatte 7 befestigt ist. Der Elektromotor 9a treibt eine Spindel 9b an, die sich im Wesentlichen in Längsrichtung X erstreckt. Auf der ersten Spindel 9b ist eine Laufmutter 14 aufgesetzt, die in Gewindeeingriff mit der Spindel 9b steht. Durch den ersten Elektromotor 9a angetrieben kann durch die Drehung der ersten Spindel 9b die Laufmutter 14 gegenüber der Spindel in Längsrichtung X bewegt werden. Dazu ist die Laufmutter 14 in einem Aufnahmebauteil 13 drehfest aufgenommen. Das Aufnahmebauteil 13 ist an dem Sitzträger 6 befestigt, sodass durch eine Drehung der ersten Spindel 9b die Sitztiefenplatte 7 gegenüber dem Sitzträger 6 in Längsrichtung X bewegt werden kann. Alternativ kann auch das Aufnahmebauteil 13 an der Sitztiefenplatte 7 und die erste Antriebsvorrichtung 9 an dem Sitzträger 6 befestigt sein. Weiterhin ist teilweise vorderhalb beziehungsweise teilweise seitlich neben der Sitztiefenplatte 7 eine Sitzneigungsantriebsvorrichtung 10 angeordnet. Die Sitzneigungsantriebsvorrichtung 10 ist dabei an der Sitztiefenplatte 7 befestigt und umfasst einen Elektromotor, eine zweite Spindel und eine zweite Laufmutter. Der zweite Elektromotor erstreckt sich im Wesentlichen entlang der Breitenrichtung Y und die zweite Spindel erstreckt sich im Wesentlichen entlang der Längsrichtung X. Die zweite Laufmutter ist zudem drehfest in einer Kulissenführung aufgenommen, durch die eine Linearbewegung der zweiten Laufmutter in eine Drehbewegung der Sitzneigungsplatte 8 um die Drehachse A umgewandelt wird.

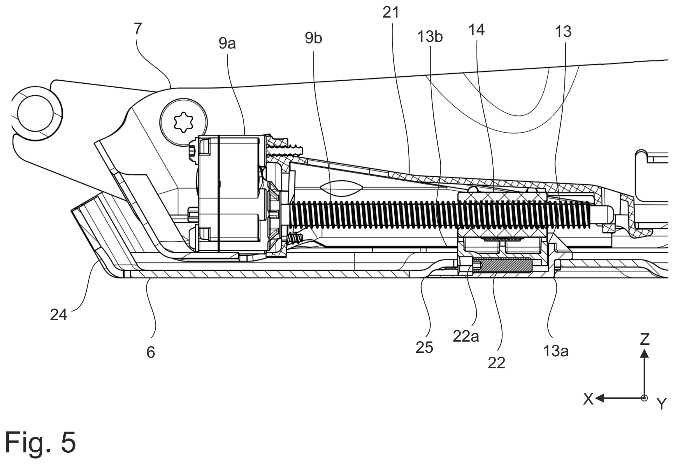

Die Figur 5 zeigt einen Schnitt durch einen Fahrzeugsitzaufbau 5 mit der Sitztiefenplatte 7 und dem Sitzträger 6. Die Sitztiefenplatte 7 und der Sitzträger 6 sind beide schalenförmig ausgeführt, wobei der Sitzträger 6 die Sitzschale aufnimmt. Der erste Elektromotor 9a ist in einem vorderen Bereich der Sitztiefenplatte 7 nahe einer Umwandung der Sitztiefenplatte 7 angeordnet und fest mit dieser verbunden. An den Elektromotor 9a anschließend und mit diesem wirkverbunden ist die Spindel 9b angeordnet, die im Wesentlichen entlang der Längsrichtung X erstreckt. Der Elektromotor 9a und insbesondere die Spindel 9b werden dabei von einem keilförmigen Halteelement 21 aufgenommen. Das Halteelement 21 lagert dabei die Spindel 9b zumindest in einem hinteren Endbereich. Der vordere Endbereich der Spindel 9b wird dahingegen vom Elektromotor 9a aufgenommen. Die Spindel 9b verläuft zudem durch das Aufnahmebauteil 13, in dem ein hier nicht gezeigte Laufmutter 14 drehfest aufgenommen ist. Das Aufnahmebauteil 13 besteht dabei aus einem ersten Teil 13a, der fest mit dem Sitzträger 6 verbunden ist und einem zweiten Teil 13b, der lösbar mit dem ersten Teil verbunden ist. Um den ersten Teil 13a und den zweiten Teil 13b miteinander zu verbinden ist eine Gewindestift 22 vorgesehen, der mit einem Antrieb 22a in Form eines Innensechskant versehen ist. Das Aufnahmebauteil 13 weist für den Gewindestift 22 eine Gewindeausnehmung 23 auf, die zur Hälfte im ersten Teil 13 und zur Hälfte im zweiten Teil 13b verläuft. Um den Antrieb 22a des Gewindestiftes 22 zugänglich zu machen, weist der Sitzträger 6 eine Zugangsöffnung 24 auf. Die Zugangsöffnung 24 ist dabei auf der Vorderseite des Sitzträgers 6 angeordnet, von wo aus ein Werkzeug zum Lösen des Gewindestiftes 22 zwischen Sitzträger 6 und Sitztiefenplatte 7 einführbar ist. Vor dem Aufnahmebauteil 13 ist zudem eine Ausgabeöffnung 25 im Boden des Sitzträgers 6 angeordnet, durch die der Gewindestift 22 aus dem Sitzträger 6 ausgegeben werden kann.

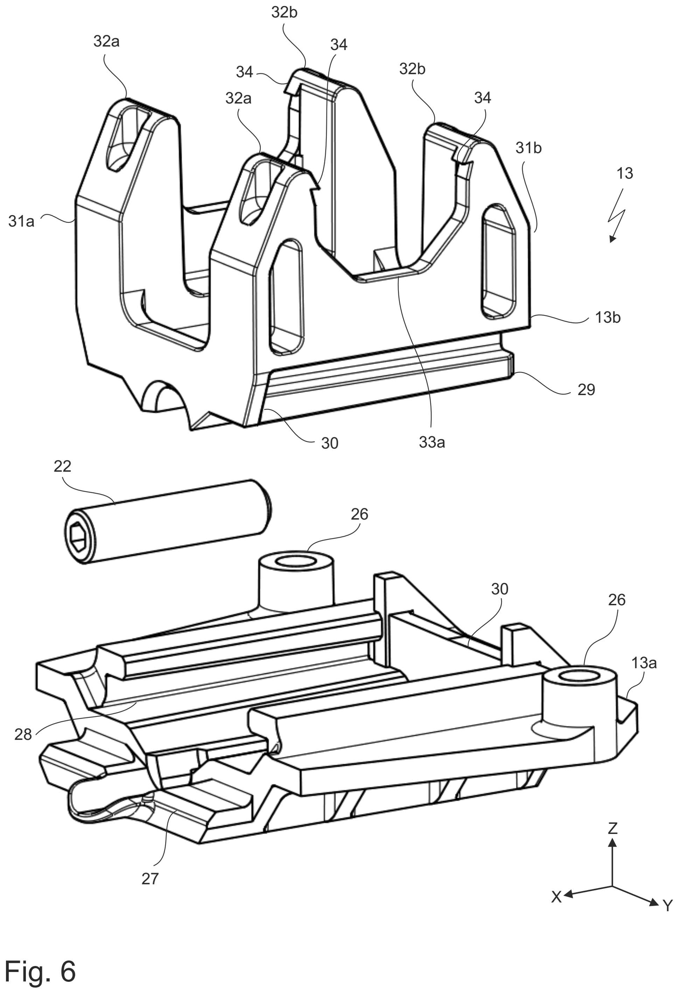

Figur 6 zeigt eine Explosionsdarstellung des Aufnahmebauteils 13. Der erste Teil 13a weist zwei Buchsen 26 auf, durch die der erste Teil 13a mit dem Sitzträger 6 verschraubt werden kann. Vorderseitig weist der erste Teil 13a einen spundartige Ausformung 27 auf, wobei der erste Teil mit dem Sitzträger 6 spundartig verbunden und über die Buchsen 26 mit dem Sitzträger 6 verschraubt werden kann. Weiter weist der erste Teil 13a eine Nut 28 auf in die ein Profil 29 der des zweiten Teils 13b eingesetzt werden kann. Der erste Teil 13a weist rückseitig und der zweite Teil 13b weist vorderseitig einen Anschlag 30 auf, die die Bewegung des Profils 29 in der Nut 28 in Längsrichtung teilweise einschränken. Der zweite Teil 13b ist zur Aufnahme einer Schub- und Zugkraft ausgebildet. Dazu umfasst der zweite Teil 13b einen ersten gabelförmigen Abschnitt 31a und einen zweiten gabelförmigen Abschnitt 31b mit jeweils einem vorderen Zinken 32a und einem hinteren Zinken 32b. Die vorderen Zinken 32a und die hinteren Zinken 32b schließen eine trapezförmige Ausnehmung 33a zur Aufnahme der Laufmutter 14 ein. Am oberen Ende weisen die Zinken 32a, 32b Haken 34 auf, durch die hier nicht gezeigte Klammerelemente 33 in den trapezförmigen Ausnehmungen 33a befestig werden können. Zwischen den beiden gabelförmigen Abschnitten 31a und 31b verläuft die Spindel 9b, die insbesondere vom zweiten Teil 13b gabelförmig umschlossen. Hier gezeigt ist der zweite Anteil 13b oberhalb des ersten Anteils 13a angeordnet, wobei beide Anteile 13a und 13b den Gewindestift 22 umschließen.

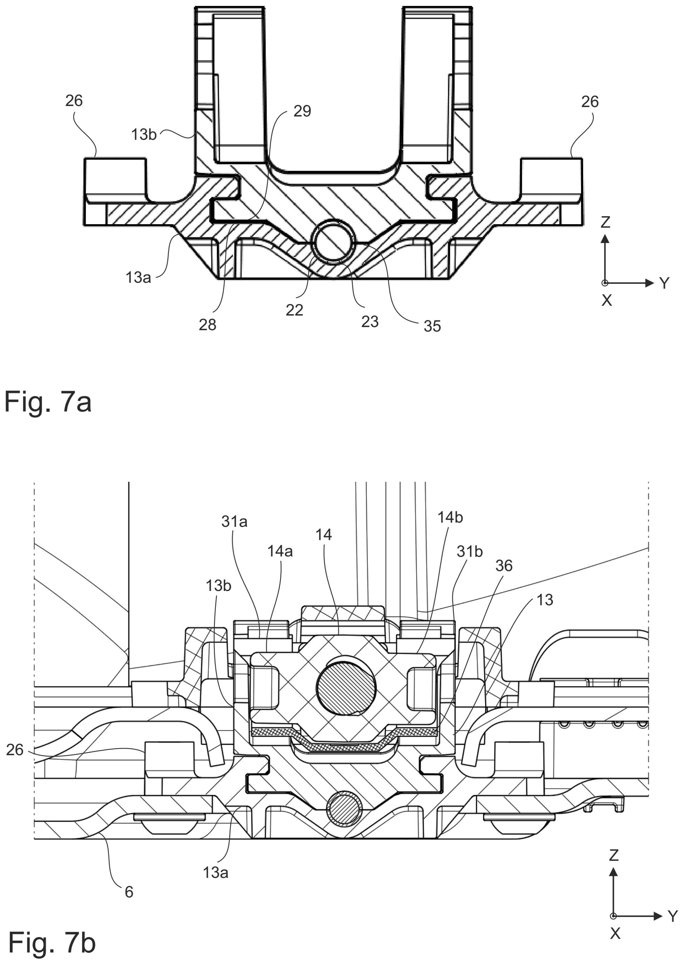

Die Figur 7a zeigt einen Schnitt durch das Aufnahmebauteil 13. Im unteren Bereich ist der erste Teil 13a angeordnet an dem sich rechts und linksseitig flügelartig die Buchsen 26 erstrecken. Oberhalb davon ist der zweite Teil 13b angeordnet, wobei der erste Teil 13a und der zweite Teil 13b ineinander eingreifen. Dazu weist der erste Teil 13a eine im Wesentlichen T-förmige Nut 28 und ein komplementäres, T-förmiges Profil 29 auf. Dabei weist die Nut 28 beziehungsweise das Profil 29 mittig eine trapezförmige Verdickung 35 auf, in der die Gewindeausnehmung 23 beziehungsweise der Gewindestift 22 aufgenommen ist. Durch den Gewindeeingriff des Gewindestiftes 22 mit der Gewindeausnehmung 23 wird eine formschlüssige Kraftübertragung zwischen dem ersten Teil 13a und dem zweiten Teil 13b gebildet, der beide miteinander fest aber lösbar verbindet.

Die Figur 7b zeigt einen Ausschnitt eines Schnittes durch den Sitzträger 6 und das Aufnahmebauteil 13. In dem zweiten Teil 13b ist die Laufmutter 14 zwischen dem ersten gabelförmigen Abschnitt 31a und dem zweiten gabelförmigen Abschnitt 31b angeordnet. Dazu weist die Laufmutter 14 einen ersten Zapfen 14a und einen zweiten Zapfen 14b auf, die in den trapezförmigen Ausnehmungen 33a aufgenommen sind. Die beiden Zapfen 14a und 14b erstrecken sich im Wesentlichen in Breitenrichtung Y. Zwischen Laufmutter 14 und Aufnahmebauteil 13 ist ein elastisches Klammerelement 36 angeordnet, dass ein Spiel zwischen Aufnahme 13 und Laufmutter 14 reduziert oder eliminiert. Mittig durch die Laufmutter 14 verläuft die Spindel 9b, die beide im Gewindeeingriff stehen.

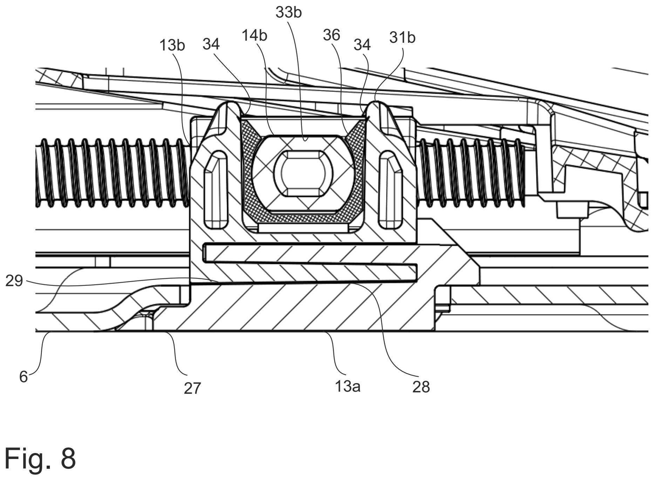

Die Figur 8 zeigt einen Schnitt durch das Aufnahmebauteil 13 und die Laufmutter 14 in einer weiteren Ausführungsform. Das Aufnahmebauteil 13 ist spundartig mit dem Sitzträger 6 verbunden, wobei der Spund 27 unter dem Sitzträger 6 angeordnet ist. Die Nut 28 und das Profil 29 sind zudem in Längsrichtung X keilförmig ausgebildet, wobei ein vorderer Anteil in Höhenrichtung höher ist als ein hinterer Anteil. Der zweiten gabelförmigen Abschnitt 31b schließt eine rechteckförmige Ausnehmung 33b auf, in der der zweite Zapfen 14b aufgenommen ist. Der zweite Zapfen 14b wird gabelförmig vom Klammerelement 36 eingeschlossen. Dabei wird das Klammerelement 36 von den Haken 34 in der Ausnehmung 33b fixiert. Das Klammerelement 36 ist nach oben hin geöffnet, wobei der Zapfen 14b von oben in den gabelförmigen Abschnitt 31b beziehungsweise in das Klammerelement 36 eingesetzt werden kann. Der Zapfen 14b der Laufmutter 14 ist zumindest teilweise quaderförmig ausgebildet. Die den Zinken 32a und 32b zugewandten Seiten der Zapfen sind dabei konvex ausgebildet.

### Bezugszeichenliste

- 1: Fahrzeugsitz
- 2: Fahrzeugsitzunterbau
- 3: Unterer Anteil
- 4: Oberer Anteil
- 4a: Verstellschienen
- 5: Fahrzeugsitzaufbau
- 6: Sitzträger
- 7: Sitztiefenplatte
- 8: Sitzneigungsplatte
- 9: Antriebsvorrichtung
- 9a: erster Elektromotor
- 9b: erste Spindel
- 10: Sitzneigungsantriebsvorrichtung
- 11: Überlappungsbereich
- 12: Führungseinrichtung
- 12a: Führungsnut
- 12b: Nutensteine
- 12c: Entnahmeöffnung
- 13: Aufnahmebauteil
- 13a: erster Teil
- 13b: zweiter Teil
- 14: Laufmutter
- 14a: erster Zapfen
- 14b: zweiter Zapfen
- 15: Loslager
- 15a: erstes Loslager
- 15b: zweites Loslager
- 16: Sitzteilbaugruppe
- 17: Sitzpolster
- 18: Rückenlehne
- 19: Kopfstütze
- 20: Sitzwange
- 21: Halteelement
- 22: Gewindestift
- 22a: Antrieb
- 23: Gewindeausnehmung
- 24: Zugangsöffnung
- 25: Ausgabeöffnung
- 26: Buchse
- 27: Spund
- 28: Nut
- 29: Profil
- 30: Anschlag
- 31a: erster gabelförmiger Abschnitt
- 31b: zweiter gabelförmiger Abschnitt
- 32a: vorderer Zinken
- 32b: hinterer Zinken
- 33a: trapezförmige Ausnehmung
- 33b: rechteckförmige Ausnehmung
- 34: Haken
- 35: Verdickung
- 36: Klammerelement
- A: Drehachse
- X: Längsrichtung
- Y: Breitenrichtung
- Z: Höhenrichtung

## Patentansprüche

1. Fahrzeugsitz (1), umfassend einen Fahrzeugsitzaufbau (5) mit einem Sitzträger (6) und einer Sitztiefenplatte (7), wobei die Sitztiefenplatte (7) beweglich an dem Sitzträger (6) angeordnet ist und durch eine Antriebsvorrichtung (9) in einer Längsrichtung (X) gegenüber dem Sitzträger (6) verschiebbar ist, wobei die Antriebsvorrichtung (9) mit einem Aufnahmebauteil (13) kraftübertragend verbunden ist, **dadurch gekennzeichnet, dass**
das Aufnahmebauteil (13) zumindest zweiteilig ausgebildet ist, wobei ein erster Teil (13a) fest mit dem Sitzträger (6) oder der Sitztiefenplatte (7) verbunden ist und ein zweiter Teil (13b) mit der Antriebsvorrichtung (9) zug- und/oder schubübertragend wirkverbunden und lösbar mit dem ersten Teil (13a) verbunden ist.

2. Fahrzeugsitz (1) nach Anspruch 1,
**dadurch gekennzeichnet, dass**
der Fahrzeugsitz (1) eine Sitzfläche und/oder ein Sitzpolster (17) aufweist, die auf der Sitztiefenplatte (7) angeordnet sind, wobei die Antriebsvorrichtung (9) zwischen Sitzfläche beziehungsweise Sitzpolster (17) und dem Sitzträger (6) angeordnet ist.

3. Fahrzeugsitz (1) nach einem der vorangegangenen Ansprüche,
**dadurch gekennzeichnet, dass**
die Antriebsvorrichtung (9) eine sich im Wesentlichen in Längsrichtung (X) erstreckende Spindel (9b) und eine Laufmutter (14) aufweist, wobei die Spindel (9b) und die Laufmutter (14) in einem Gewindeeingriff stehen und die Laufmutter (14) drehfest vom Aufnahmebauteil (13) aufgenommen ist.

4. Fahrzeugsitz (1) nach Anspruch 3,
**dadurch gekennzeichnet, dass**
die Laufmutter (14) mindestens einen sich im Wesentlichen senkrecht zur Längsrichtung (X) erstreckenden Zapfen (14a, 14b) aufweist und der zweite Teil (13b) einen zumindest teilweise gabelförmigen Abschnitt (31a, 31b) aufweist, wobei der Zapfen (14a, 14b) der Laufmutter (14) in dem gabelförmigen Abschnitt (31a, 31b) angeordnet ist.

5. Fahrzeugsitz (1) nach Anspruch 4,
**dadurch gekennzeichnet, dass**
der mindestens eine Zapfen (14a, 14b) zumindest teilweise zylinderförmig ausgebildet ist, wobei der gabelförmige Abschnitt (31a, 31b) zumindest zwei Zinken (32a, 32b) und dazwischen eine zumindest teilweise quaderförmige Ausnehmung (33b) umfasst, in der der mindestens eine Zapfen (14a, 14b) angeordnet ist.

6. Fahrzeugsitz (1) nach Anspruch 3 oder 4,
**dadurch gekennzeichnet, dass**
die Ausnehmung zwischen zwei Zinken (32a, 32b) des gabelförmigen Abschnitts (31a, 31b) in Längsrichtung (X) größer ist als der Zapfen (14a, 14b), wobei ein Klammerelement (36) vorgesehen ist, das den Zapfen (14a, 14b) zumindest teilweise umschließt und zwischen Zapfen (14a, 14b) und gabelförmigem Abschnitt (31a, 31b) verpresst ist.

7. Fahrzeugsitz (1) nach einem der vorangegangenen Ansprüche,
**dadurch gekennzeichnet, dass**
zumindest der erste Teil (13a) oder der zweite Teil (13b) eine Nut (28) aufweist und zumindest der zweite Teil (13b) oder der erste Teil (13a) ein zur Nut (28) komplementäres Profil (29) aufweist, wobei der erste (13a) und der zweite Teil (13b) durch die Anordnung des Profils (29) in der Nut (28) in einer Breitenrichtung (Y) und einer Höhenrichtung (Z) formschlüssig miteinander verbunden sind.

8. Fahrzeugsitz (1) nach Anspruch 7,
**dadurch gekennzeichnet, dass**
ein lösbares Sicherungselement (22) vorgesehen ist, wobei das Sicherungselement (22) den ersten Teil (13a) und den zweiten Teil (13b) in Längsrichtung (X) formschlüssig und oder kraftschlüssig miteinander verbinden.

9. Fahrzeugsitz (1) nach Anspruch 8,
**dadurch gekennzeichnet, dass**
das Sicherungselement (22) ein Gewindestift (22) ist, wobei das Aufnahmebauteil (13) eine komplementäre Gewindeausnehmung (23) aufweist, wobei die Ausnehmung (23) teilweise im ersten Teil (13a) und teilweise im zweiten Teil (13b) angeordnet ist, wobei ein Gewindeeingriff zwischen Gewindestift (22) und Gewindeausnehmung (23) den ersten Teil (13a) und den zweiten Teil (13b) formschlüssig Kraftübertragend miteinander verbindet.

10. Fahrzeugsitz (1) nach Anspruch 9,
**dadurch gekennzeichnet, dass**
der Sitzträger (6) zumindest teilweise schalenförmig ausgebildet ist, wobei das Aufnahmebauteil (13) zwischen Sitzträger (6) und Sitzpolster (17) beziehungsweise Sitzfläche angeordnet ist und der Fahrzeugsitz (1) eine Zugangsöffnung (24) aufweist, wobei der Gewindestift (22) und/oder ein Antrieb des Gewindestiftes (22a) durch die Zugangsöffnung (24) von außerhalb des Fahrzeugsitzes (1) zugänglich ist.
